# EUROPÄISCHE PATENTSCHRIFT

(11) **EP 1 967 821 B1**
(45) Veröffentlichungstag und Bekanntmachung des Hinweises auf die Patenterteilung: **26.05.2010**
(21) Anmeldenummer: 07004909.3
(22) Anmeldetag: 09.03.2007
(51) Int. Cl.: G01C 21/36, G02B 27/01

(54) **Assistenzsystem für den Fahrer eines Fahrzeugs, insbesondere eines Kraftfahrzeugs für den öffentlichen Strassenverkehr**
Assistance system for the driver of a vehicle, in particular of a motor vehicle for road traffic
Système d'assistance pour le conducteur d'un véhicule, en particulier d'un véhicule automobile pour le trafic routier

(43) Veröffentlichungstag der Anmeldung: 10.09.2008
(73) Patentinhaber: Sassin, Wolfgang, Dr., 52441 Linnich (DE)
(72) Erfinder: Sassin, Wolfgang, Dr., 52441 Linnich (DE)
(74) Vertreter: Baum, Wolfgang

(56) Entgegenhaltungen:
- EP-A- 1 647 807
- DE-A1- 10 245 334
- DE-A1- 19 813 300
- DE-A1-102005 048 398
- GB-A- 2 419 118
- JP-A- 7 164 958
- JP-A- 2005 199 844
- US-A1- 2002 055 808
- US-A1- 2005 071 082
- US-A1- 2006 119 705
- US-A1- 2006 155 467
- US-B1- 6 985 073

## Beschreibung

Die Erfindung bezieht sich auf ein Assistenzsystem für den Fahrer eines Fahrzeugs, insbesondere eines Kraftfahrzeugs für den öffentlichen Straßenverkehr, mit Sensoren, die so angepasst sind, dass sie kontinuierlich Fahrzeug- und Umgebungsdaten und als Missionsdatum das Fahrtziel erfassen und mit einem Prozessrechner, der geeignet ist, die erfassten Daten in Informationssignale für den Fahrer umzusetzen, wobei mittels einer Projektionseinheit, die so angepasst ist, dass sie ein Bild eines perspektivisch korrekt an das wahre Sichtfeld des Fahrers angepassten virtuellen Fahrzeugs als Fahrzeugsymbol kontinuierlich so in das Sichtfeld (Windschutzscheibe) des Fahrers projiziert, dass dieser es als vorausfahrendes Lotsenfahrzeug wahrnehmen kann.

Assistenzsysteme der vorbezeichneten Art sind aus der DE 102 45 334 A1 und der US 2002/0055808 A1 bekannt.

Das in der DE 102 45 334 A1 offenbarte Assistenzsystem ist eine Navigationsvorrichtung, die wie es für übliche Navigationsvorrichtungen bekannt ist, ein Fahrzeug von einem Ort A bis zu einem Ort B führen soll. Eine fahrtechnische Hilfestellung oder Beeinflussung des eigenen Fahrzeugs durch das dort offenbarte Leitobjekt ist nicht vorgesehen. Die vorbekannte Vorrichtung braucht wie jedes Navigationssystem eine sogenannte "Rückmeldeschwelle". Diese manifestiert sich darin, dass grundsätzlich erst nach einer nicht mehr korrigierbaren von der Systemempfehlung abweichenden Routenentscheidung des Fahrzeuglenkers in einer vom System benötigten Totzeit eine neue dann geänderte Handlungsempfehlung, typischerweise in eine neue Routenempfehlung gegeben wird. Das Problem eines solchermaßen diskontinuierlichen Zielwechsels und der gerade bei Spurwechsel und Abbiegevorgängen notwendigen detaillierten Information des Fahrers über seinem Bewegungspfad benachbarte Kollisionsobjekte wird in der genannten Druckschrift nicht angesprochen und könnte mit dem dort offenbarten technischen Ansatz auch nicht gelöst werden. Dem Fahrer des Fahrzeugs werden nur zeitlich veränderliche Positionen des eigenen Fahrzeugs in einem ruhenden kartographisch entstandenen Referenzsystem gegeben, nicht aber Informationen über den tatsächlichen Bewegungszustand und die Fahrphysik des eigenen Fahrzeugs.

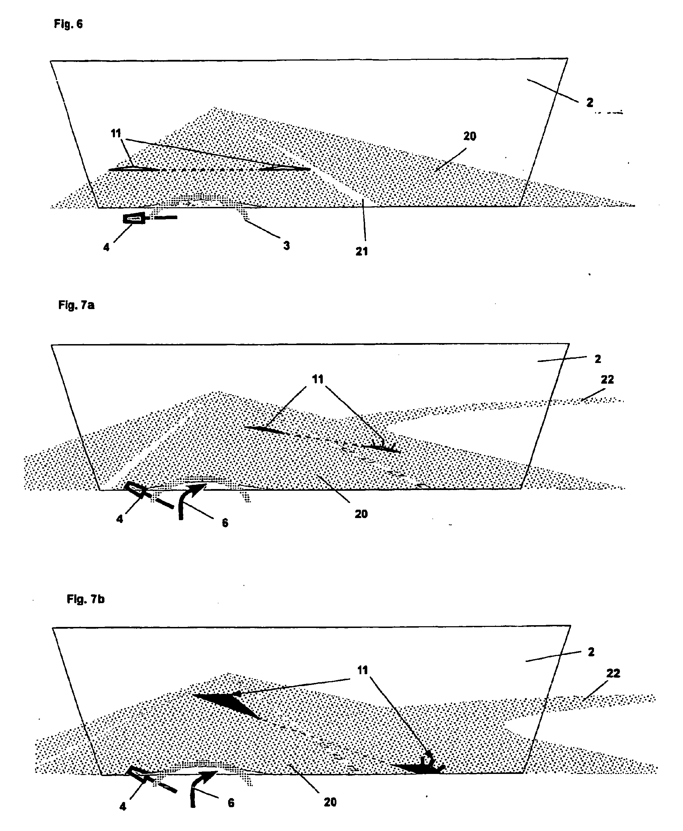

In der US 2002/0055808 A1 wird ein Assistenzsystem für den Fahrer eines Fahrzeugs in Form eines Anzeigesystems offenbart, bei dem ein virtuelles Fahrzeug in einer Position projiziert wird, die sich einerseits aus als geeignet erfassten Straßeneigenschaften und andererseits aus den Bewegungsdaten des eigenen Fahrzeugs ergibt. Dabei wird die Bestimmung der Bewegungsdaten des eigenen Fahrzeugs dazu benutzt, eine geschwindigkeitsabhängige Referenzentfernung (vergleiche LRO in Fig. 6) des virtuellen Fahrzeugs zu schaffen. Damit wird quasi eine Art Sicherheitsabstand vorgeschrieben, aus der der Fahrer alle anderen Informationen ablesen muss. Die Führungsfunktion setzt diskontinuierlich ein, wenn feste Verzögerungsgrenzwerte überschritten werden. Eine vom Fahrer wählbare Eingabe von Missionsdaten, insbesondere die Sollgeschwindigkeit, Sicherheitsabstände zu festen und bewegten Hindernissen und der Nutzungsanteil der theoretisch möglichen Quer- und Längsbeschleunigungen des eigenen Fahrzeugs sind nicht vorgesehen und es gibt auch keine Hinweise auf eine Programmierungsmöglichkeit durch den Fahrer. Fahrstil und Fahrweise entsprechend der installierten Computerprogramme sind nach der Lehre dieser Druckschrift ein für allemal festgelegt, was für die Praxis nicht akzeptierbar ist.

Ein weiterer Nachteil des Anzeigesystems nach der US 2002/0055808 A1 ist darin zu sehen, dass die dem Fahrer gegebene Führungsfunktion grundsätzlich diskontinuierlich einsetzt, wenn feste Verzögerungsgrenzwerte überschritten werden.

Weiterhin ist es aus dem Stand der Technik DE 198 13 300 A1 bekannt, ein virtuelles Bild vor einer Windschutzscheibe darzustellen, wobei die Position von wenigstens einem Fahrzeugzustandsparameter abhängt. Über die Abhängigkeit der Bilddarstellung von den Fahrzeugzustandsparametern wird dort nichts ausgesagt.

Die DE 101 03 922 A1 befasst sich mit der Einblendung von Warnsignalen, generell von Informationen in das foveale Blickfeld. Information wird dort mit der Blickrichtung verknüpft. Das dort offenbarte System liefert diskrete ortsspezifische Zusatzinformationen, ist aber nicht geeignet, dynamische Abläufe mit veränderlichen Raumkoordinaten zu unterstützen.

Aus der GB 2 319 118 A ist es bekannt, eine einzelne Informationsgröße in einer einzigen räumlichen Koordinate darzustellen. Perspektivische Interpretation in Form einer Führungsidentität ist dort nicht möglich.

Schließlich offenbart das Führungssystem für Fahrzeuglenker nach der WO 93/05492 A1 Führungsinformationen für Blindfahrt als Instrumentenfahrt mittels eines symbolischen Steuerungsdisplays. Das System arbeitet mit einem Zielpunkt, der durch Bremsen, Gasgeben und Lenken im Zentrum eines Koordinatensystems gehalten werden soll. Eine Verlagerung der Information in die der natürlichen Wahrnehmung zugängliche Umgebung und ein daraus ableitbarer Vergleich zwischen eigener Bewegungsplanung und Assistenz wird schon dadurch ausgeschlossen.

Weiterhin beschreibt die Druckschrift US 2005/071082 A1 (OHMURA HIROSHI ET AL) (2005-03-31), dort insbesondere Fig. 6 die Verwendung von Missionsdaten ausschließlich als Zielangabe für eine Navigationshilfe. Die weiteren Angaben in Fig. 6 und auch die gesamte Beschreibung der dort offenbarten Einrichtung sehen daneben nur zusätzliche vor Fahrtantritt fest einzugebende Parameter vor, die die Darstellung eines virtuellen Lotsenfahrzeugs in seinen Position, Größe und Transparenz verändern. In jedem Fall wird das virtuelle Lotsenfahrzeug immer im Zentrum des Aufmerksamkeitsfeldes des Fahrers angezeigt und führt deshalb zu dem Nachteil, dass immer eine Konkurrenz zu anderen, nicht in Karten enthaltenen Bewegungskonkurrenten vorhanden ist. Diese führt zu Irritationen des Fahrers. Veränderungen, etwa die seitliche Verschiebung des Projektionsortes des virtuellen Lotsen in der Windschutzscheibe, dessen Vergrößerung oder Verkleinerung oder dessen Durchsichtigkeit widersprechen regelmäßig dem tatsächlichen Verhalten eines realen Lotsens der vor dem zu führenden Fahrzeug erführe. In der hier zitierten Druckschrift wird deshalb die Notwendigkeit offenbart, durch zusätzlich vom System gegebene akustische Kommentare und zusätzliche Richtungspfeile auf unklare oder gar missverständliche Verhaltensweisen des virtuellen Lotsens hinzuweisen. So bedeutet eine Verkleinerung des virtuellen Lotsens gerade nicht, dass sich dieser weiter vom Fahrer entfernt und deshalb der Anschluss zum Lotsen durch erhöhte Geschwindigkeit gehalten werden muss, sondern, dass die durch den eingespiegelten virtuellen Lotsen beschränkte Sicht auf Hindernisse freigegeben werden muss. Folgerichtig lehrt die betrachtete Druckschrift auch, im dichten Straßenverkehr wegen der dann unvermeidlich auftretenden Fehlinformationen des Fahrers die Lotsenfunktion ganz abzuschalten.

Generell erfassen Assistenzsysteme für Fahrzeuge nach dem Stand der Technik, insbesondere für Kraftfahrzeuge für den öffentlichen Verkehr regelmäßig Orts- und Bewegungskoordinaten von Objekten ihrer äußeren Umgebung. Sie nutzen dabei die Fähigkeiten technischer Sensoren (Messgeräte) empfindlicher, genauer, schneller, trennschärfer und zuverlässiger als das menschliche Sensorium bestimmte Daten über die Umgebung zu gewinnen und unter Verwendung ingenieurtechnischer Modelle auszuwerten.

Der Begriff "Fahrzeug" soll hier alle Arten von mobilen Objekten/Geräten einschließen, die von einem Operator (Fahrer) geführt oder gesteuert werden. Typischerweise sind auch Fernsteuerungen von Robotern und generell Steuerungen von materiellen wie virtuellen Objekten (Computerspiele) erfasst, die mittels optischer, akustischer oder anderer Verfahren direkt oder indirekt beobachtet und beeinflusst werden.

Die äußere Umgebung quantitativ und qualitativ beschreibende Daten aus bekannten Assistenzsystemen werden über Messgeräte/Sensoren erfasst und stehen beispielsweise als zeitabhängige Distanz- und Richtungsinformation über Hindernisse zur Verfügung, die die freie Bewegung des zu steuernden Fahrzeugs beschränkten. Solche Informationen über die Umgebung eines Fahrzeugs werden üblicherweise als beschreibende Primärinformationen angezeigt, beispielsweise als numerische Entfernungsangabe zu einem stehenden oder vorausfahrenden anderen Fahrzeug.
Die bekannt gewordenen Assistenzsysteme leiden im Vergleich zur natürlichen kognitiven Wahrnehmung eines Operators oder Fahrers an einem entscheidenden Defizit:
Zwischen der technischen, mit Hilfe von Sensoren vorgenommenen Erfassung der Umwelt und der weitgehend freien Bewegungsabsicht des Fahrers, mit der er sich unterschiedliche Pfade zwischen Hindernissen hindurch oder um diese herum zurecht legt, besteht keine funktionale Verbindung. Erst durch die Verknüpfung zwischen dem, im Voraus zu denkenden Bewegungspfad und den Informationen über reale Bewegungsmöglichkeiten (etwa dem Fahrbahnverlauf) und/oder Hindernissen innerhalb seines Bewegungsspielraumes gewinnt der Fahrer die Möglichkeit, relevante Objekte zu identifizieren und sie von irrelevanten, weil fernab von seinem beabsichtigten Bewegungspfad liegenden Objekten zu separieren und schließlich die verbleibenden wenigen, aber entscheidenden Objekte zur Bestätigung oder zur Modifikation seiner individuellen Bewegungsabsicht heranzuziehen. Die weit überwiegende Mehrzahl an Informationen über die äußere Umgebung kann durch diesen mental arbeitenden Filterprozess unterdrückt werden. Erst dadurch gelangt der Fahrer zu klaren und eindeutigen Entscheidungen hinsichtlich der Umsetzung seines zunächst (nur versuchsweise und grob) entworfenen Bewegungsplanes.

Die in bekannten Assistenzsystemen vorgenommen Repräsentationen kritischer Objekte und kritischer Vorgänge im Außenraum des zu steuernden Fahrzeugs konkurrieren mit der eigenen natürlichen Wahrnehmung der realen Bewegungskulisse durch den Fahrer. Sie können nur mit zeitlicher Verzögerung und auch nur intermittierend in den natürlichen Prozess der Festlegung und Kontrolle des beabsichtigten Bewegungspfades einbezogen werden.

Die mittels technischer Sensoren gewonnenen Informationen über Objekte im Bewegungsraum eines zu steuernden Fahrzeugs werden abhängig von der instantanen Ausrichtung und Bewegung des die Sensoren tragenden Fahrzeugs ermittelt. Sie werden üblicherweise über Displays, die ebenfalls fest mit dem Fahrzeug verbunden sind, dem Fahrer präsentiert. Der Fahrer erhält damit zwar Hinweise, welche Orte oder Objekte er in dem zeitlich vor ihm liegenden Entscheidungsfenster meiden oder bevorzugt ansteuern soll. Die komplexe und bewegungslogische Übertragung dieser instrumentellen Umgebungsdaten in seine subjektive natürliche Beobachtungsposition und die Anpassung seines Bewegungsplanes muss er aber selbst ohne technische Unterstützung leisten.

Das führt dann zu Wahrnehmungs- und Aufmerksamkeitskonflikten, wenn die Warnung oder der Hinweis auf freie Bewegungsräume in einer Bewegungssituation aufgenommen werden sollen, in der zeitkritische Steuerungsentscheidungen durch den Fahrer getroffen werden müssen. In der Praxis sind instrumentelle Hilfsinformationen durch die bekannten Assistenzsysteme gerade dann durch einen Fahrer nicht verwertbar, wenn er sie am dringensten benötigen würde, und zwar deshalb, weil er seine Aufmerksamkeit nicht gleichzeitig auf die reale Außenwelt und auf eine räumlich anders repräsentierte, instrumentelle Information fokussieren kann.

Aufgabe der vorliegenden Erfindung ist es deshalb, ein gattungsgemäßes Assistenzsystem zu schaffen, bei dem die objektiven Informationen so präsentiert werden, dass diese vom Fahrer zusammen mit der realen Außenwelt als unmittelbare und einheitliche Grundlage für die Konzeption und die Überprüfung seines Bewegungsplanes dienen können. Dabei kommt es entscheidend darauf an, dem Fahrer die von Sensoren erfassten Informationen in einer Form anzubieten, die seine Aufmerksamkeit nicht von jenen dynamischen Abläufen ablenkt, die er laufend analysieren und in seinen Bewegungsentwurf einbeziehen muss. Das sind vor allem jene Bereiche seines Bewegungsplanes, die für ihn jeweils die höchste Priorität besitzen.

Erfindungsgemäß wird die gestellte Aufgabe dadurch gelöst, dass ein Assistenzsystem nach dem Oberbegriff des Patentanspruchs 1 eine vom Fahrer betätigbare Bedieneinheit umfasst, von der aus dem Prozessrechner als zusätzlich wählbare Missionsdaten die Sollgeschwindigkeit, Sicherheitsabstände zu festen und bewegten Hindernissen und der Nutzungsanteil der theoretisch möglichen Quer- und Längsbeschleunigungen zuführbar sind und der Prozessrechner so angepasst und programmiert ist, dass er aus allen erfassten Datengruppen (Fahrzeugdaten (FD), Umgebungsdaten (DU) und Missionsdaten (MD)) einen Bewegungspfad des virtuellen Fahrzeugs (VF) generiert, welcher eine gefahrlose Bewegung in der realen Umgebung aufzeigt.

Durch die erfindungsgemäße Verknüpfung von Fahrzeugdaten, Umgebungsdaten und Missionsdaten gelingt es dem Fahrer ein Lotsenfahrzeug, vergleichbar einem real auf der Straße vorausfahrenden Lotsenfahrzeug, zu präsentieren, dem er folgen kann, ohne dabei seine eigenständige Beobachtung der realen Welt unterbrechen zu müssen. Das Lotsenfahrzeug kann die für den Fahrer wesentlichen Umgebungsdaten früher und präziser wahrnehmen und im Sinne einer gefahrlosen Fortbewegung in Bewegungsentscheidungen umsetzen als er selbst das vermöchte. Dies wird ermöglicht durch die weiterreichenden und höher auflösenden technischen Sensoren, deren Umwelterfassung zu Richtungsänderungen oder anderen Bewegungsänderungen des virtuellen Fahrzeugs umgesetzt wird, und die den Fahrer dadurch auf ein potentielles Kollisionsobjekt hinweisen, noch ehe dieser es mit seinen natürlichen Sinnen ausreichend erfassen könnte. Der Fahrer erkennt aus der vom Prozessrechner generierten Bewegung des virtuellen Fahrzeuges einen optimalen Bewegungspfad und braucht dem Fahrzeugsymbol in seinen Sichtfeld nur zu folgen, um sich mit seinem Fahrzeug in der realen Umgebung unter realen Bedingungen in einem sicheren Bereich zu bewegen.

Obwohl der Fahrer durch das erfindungsgemäße Assistenzsystem also in die Lage versetzt wird, einem gefahrlos vorausfahrenden Lotsenfahrzeug lediglich in angemessenem Abstand folgen zu müssen, ist es ein besonderer Vorzug des erfindungsgemäßen Assistenzsystems, dass der Fahrer
seine Bewegungsrichtung, Abstand und Relativgeschwindigkeit zu dem virtuellen Lotsenfahrzeug modifizieren kann und damit die Funktionalität und Sensitivität des Lotsen aktiv überprüfen und in einer Weise kategorisieren kann, wie er das mit anderen Objekten seiner realen Bewegungskulisse auch handhabt (z. B. unsichere andere Verkehrsteilnehmer). Obwohl das dem Fahrer kontinuierlich ins Sichtfeld projizierte Lotsenfahrzeug auf Hindernisse im Bewegungspfad durch Geschwindigkeits- und Richtungsänderungen reagiert, was durch die technisch hochwertigen Sensoren mit zeitlichen Vorsprung vor dem Handeln des realen Fahrers möglich ist, wird dieser dennoch in die Lage versetzt, kritisch zu überprüfen, ob das Ergebnis der ihm präsentierten Zusammenfassung von Informationen in Form der gezeigten Bewegung des Lotsenfahrzeugs sinnvoll ist oder nicht. Er hat jederzeit die Möglichkeit, das Lotsenfahrzeug bzw. dessen Bewegung zu ignorieren und einen anderen Bewegungspfad zu wählen.

Ein weiterer wesentlicher Vorteil des erfindungsgemäßen Assistenzsystems gegenüber dem Stand der Technik besteht darin, dass der Fahrer je nach der individuell gewollten Fahrweise (schnell oder langsam; ruhig oder sportlich) den Prozessrechner so programmieren kann, dass er die für ihn nützliche Assistenzinformation erhält.

Vorteilhaft ist es, wenn das Programm des Prozessrechners so angepasst ist, dass Eigenschaften des Fahrzeugsymbols, wie Größe, Farbe, Helligkeit, Lautstärke, Kontrast, in Abhängigkeit von aktuellen kritischen Grenzwerten für die Eigenbewegung des realen Fahrzeugs verändert werden. So kann z. B. bei zu dichtem Auffahren auf ein vorausfahrendes reales Fahrzeug sich die Helligkeit des Fahrzeugsymbols deutlich steigern oder es kann die Größe des Fahrzeugsymbols zunehmen.

Eine weitere vorteilhafte Ausgestaltung erfährt das erfindungsgemäße Assistenzsystem dadurch, dass das Programm des Prozessrechners so angepasst ist, dass das Fahrzeugsymbol sich bei Annäherung des realen Fahrzeugs an eingestellte Grenzwerte von Bewegungsparametern (Geschwindigkeit oder Beschleunigung) den Grenzen des Sichtfeldes annähert und bei Überschreiten der eingestellten Grenzwerte in ein Grenzwertsymbol (vorzugsweise eine Grenzlinie) umgewandelt wird.

Eine weitere vorteilhafte Ausgestaltung des erfindungsgemäßen Assistenzsystems besteht darin, dass es Mittel umfasst mit denen Fahrzeugdaten FD und Umgebungsdaten UD, wie an sich bekannt, Assistenzmodulen mit eigenen Modulrechnem MR, wie elektronische Stabilitätskontrolleinrichtung ESP oder Antiblockiersystem ABS oder Bremsassistent für Notfallbremsung oder Navigationssystem zuführbar sind und von dort unverändert oder durch Rechenoperation transformiert dem Prozessrechner R zuführbar sind. Durch die Vorverarbeitung von Fahrzeug- und Umgebungsdaten in solchen Assistenzmodulen kann nicht nur, wie es bislang für solche Assistenzmodule bekannt ist, in die Fahrzeugführung eingegriffen werden, sondern es kann die Komplexität und der Rechenaufwand des Prozessrechners des erfindungsgemäßen Assistenzsystems erheblich vereinfacht werden.

In weiterer Ausbildung des erfindungsgemäßen Assistenzsystems wird dann vorgeschlagen, dass vorgesehene Assistenzmodule so angepasst sind, dass ein Eingriff in die Steuerung des Fahrzeugs durch dafür charakteristische Signale an den Prozessrechner R gemeldet wird, aus denen dieser Signale für eine unstetige Änderung des Fahrzeugsymbols generiert. Eine solche Ausgestaltung hat den Vorteil, dass dem Fahrer durch Veränderung der Eigenschaften des Fahrzeugsymbols, wie es weiter oben bereits beschrieben wurde, angezeigt wird, dass er sich in einem Fahrzustand befindet, indem die Assistenzmodule bereits zur Vermeidung von unsicheren Fahrzuständen eingegriffen haben,
d. h. in einem Fahrzustand, die in erhöhtem Maß gefahrträchtig ist.

In weiterer Ausgestaltung der Erfindung wird vorgeschlagen, dass das Fahrzeugsymbol des Lotsenfahrzeugs als transparente Dreieckspfeilspitze ausgebildet ist, deren Basisbreite proportional der Breite des realen Fahrzeugs zu der zur Verfügung stehenden Fahrspur dargestellt wird. Der Fahrer kann dadurch frühzeitig und ohne seine Blickrichtung zu den Seiten des Fahrzeugs hin zu verändern, in einfachster Weise einen sicheren mittleren Bewegungspfad auf der ihm zur Verfügung stehenden Fahrbahn einhalten.

Eine vorteilhafte Weiterbildung sieht vor, dass das Fahrzeugsymbol des Lotsenfahrzeuges anstelle eines Dreieckspfeils durch zwei quer beabstandete Dreieckspfeilspitzen gebildet ist, wobei die Gesamtbreite über beide Dreieckspfeilspitzen einschließlich Abstand wiederum proportional der Breite des realen Fahrzeugs zu der zur Verfügung stehenden Fahrbahnbreite ist. Der Vorteil dieser Ausgestaltung besteht darin, dass der zentrale Bereich des Gesichtsfeldes des Fahrers und damit der Fahrbahn für die natürliche eigene Umfelderkennung und Analyse des Fahrers frei bleibt. Darüber hinaus erleichtern die inneren und äußeren Begrenzungskonturen des Dreieckspfeilpaares vor allem eine bessere Auflösung von relativen Bewegungen des Lotsenfahrzeugs, wenn sich der Abstand (durch entsprechende Verkleinerung des Lotsenfahrzeugsymbols) zwischen realem Fahrzeug und Lotsenfahrzeug vergrößert. Der besondere Vorzug ergibt sich insbesondere bei der Abarbeitung von Blickprogrammen des Fahrers, wenn real weiter entfernt liegende Wegverläufe oder Wegmarkierungen detektiert werden müssen.

Eine besonders vorteilhafte Ausgestaltung erfährt ein erfindungsgemäßes Assistenzsystem dadurch, dass die als Lotsenfahrzeugsymbol dienende Dreieckspfeilspitze oder das Paar von Dreieckspfeilspitzen proportional der auf das Fahrzeug einwirkenden Querbeschleunigung geneigt wird. Das Fahrzeugsymbol, hier also die Dreieckspfeilspitze, nimmt eine Querneigung ein, wie ein Zweiradfahrzeug in Kurven. Das gibt dem Fahrer des realen Fahrzeugs eine sehr drastische Information über den Fahrzustand des Lotsenfahrzeugs und damit über notwenige Steuerungsmaßnahmen für das reale Fahrzeug.

In weiterer vorteilhafter Ausbildung der Erfindung soll die Höhe (H) der Dreieckspfeilspitze (n) proportional der in Fahrtrichtung auf das reale Fahrzeug wirkenden Beschleunigungen dargestellt werden. Wird also das virtuelle Fahrzeug aufgrund der im Prozessrechner verarbeiteten Sensordaten extrem verzögert um eine Gefährdungssituation zu verhindern, so wird die Höhe der Dreiecksspitze sehr groß, was den Fahrer unmittelbar zu einer Notbremsung veranlassen kann noch bevor er durch Abstandsverringerung zum Lotsenfahrzeug die Bremsnotwendigkeit erkennt. Umgekehrt, bei extremer Abnahme der Höhe der Dreieckspfeilspitze wird dem Fahrer angezeigt, dass das Lotsenfahrzeug eine nach vorne beschleunigte Bewegung ausführt und er den Abstand zum Lotsenfahrzeug nur dann einhalten kann, wenn er sein reales Fahrzeug durch Gasgeben ebenfalls beschleunigt.

Eine weitere vorteilhafte Ausgestaltung des erfindungsgemäßen Assistenzsystems besteht darin, dass das Programm des Prozessrechners R so angepasst ist, dass eine seitliche Versetzung des Fahrzeugs zur Mitte des zur Verfügung stehenden Bewegungspfades (Fahrbahn) durch eine Referenzmarkierung angezeigt wird. Eine solche Ausgestaltung hat den Vorteil, dass der Fahrer erkennt, dass er sich anders bewegt als optimal, dennoch aber auf einem möglichen und zulässigen Bewegungspfad.

Eine weitere Ausgestaltung des erfindungsgemäßen Assistenzsystems, die insbesondere eine Verfeinerung darstellt, besteht darin, dass die Sensoren für die Datengruppe Fahrzeugdaten auch solche umfassen, die geeignet sind, die Häufigkeit (Anzahl pro Zeiteinheit) und die Intensität von Steuerungsbewegungen des Fahrers aufzunehmen und das Programm des Prozessrechners aus diesen Daten abrupte Veränderungen des Fahrzeugsymbols generiert. Durch diese Ausbildung kann dem Fahrer praktisch ein virtueller Blick auf die eigene Fahrweise vermittelt werden, um ihn darauf hinzuweisen, dass diese im Regelfall aufgrund zu hoher Geschwindigkeit zu hektisch bzw. zu unsicher ist.

Eine Variante des vorbeschriebenen Assistenzsystems mit den Merkmalen des Patentanspruchs 10 erfährt seine erfinderische Weiterbildung dadurch, dass das Fahrzeugsymbol für die Führungsidentität des virtuellen Fahrzeugs (VT) durch zumindest ein Paar im Bereich der beiden A-Säulen des Fahrzeugs angeordnete, dem Fahrer zugewandte Leuchtbänder gebildet wird, deren variable Leuchtlänge und/oder variable Leuchtintensität unabhängig voneinander vom Prozessrechner ( R) über die Steuereinheit gesteuert wird.

Die Erfindung geht dabei von der Erkenntnis aus, dass zur sicheren Führung von Kraftfahrzeugen die volle Erfassung des Bewegungsumfeldes des Kraftfahrzeugs durch den Fahrer notwendig ist. Besonders problematisch für den Fahrer ist dabei die Erfassung des hinteren Halbraumes, da eine akustische Erfassung durch den abgeschlossenen Fahrzeuginnenraum nicht in Betracht kommt, so dass nur eine optische Erfassung möglich ist. Die bislang angewendeten Mittel zur optischen Erfassung des hinteren Halbraumes des Fahrers sind bekannte Rückspiegel bzw. Rückspiegelsysteme, wobei die unzulängliche Wirkung solcher bekannten Spiegel und Spiegelsysteme, die teils in der Person des Fahrers, teils auch in der Ausgestaltung der Fahrzeuge zu suchen ist, bekannt ist. In der Regel können über Rückspiegel deshalb nicht annähernd vergleichbare Informationen über Relativgeschwindigkeit oder Abstand von sich im hinteren Halbraum befindender Verkehrsteilnehmer hergeleitet werden. Neben dem Problem spiegelbildliche Information als solche richtig zu verarbeiten, ist der durch Spiegel abbildbare Teil des seitlichen und des hinteren Umfelds räumlich stark eingeschränkt. Es gibt tote Winkel oder übermäßig gekrümmte Spiegelflächen mit perspektivischer Verzerrung. Mit steigender Dichte von Bewegungskonkurrenten steigt die Komplexität der Aufgabe, Bewegungskonkurrenten zu orten, in exponentieller Weise an.

Die erfindungsgemäße Weiterbildung des Assistenzsystems für den Fahrer eines Fahrzeugs macht sich nun die Erkenntnis zu eigen, dass das menschliche Gehirn die Fähigkeit des peripheren Sehens aufweist. Darunter wird verstanden, dass sich außerhalb des zentralen Gesichtsfeldes ändernde Lichterscheinungen zur Steuerung der Aufmerksamkeit dienen. Diese Vorgänge laufen unbewusst ab. Die menschlichen Augen wissen aufgrund der Sekundärlichterscheinungen, wohin sie blicken müssen.

Durch die erfindungsgemäße Steuerung von Leuchtlänge und/oder Leuchtintensität nach Patentanspruch 10 der Leuchtbänder wird also ein quantitativ interpretierbarer Sekundärdichtverlauf erzeugt.

Bei einer bevorzugten Ausführungsform sind die Leuchtbänder entlang der beiden A-Säulen angeordnet, wobei die Leuchtlänge der Leuchtbänder als auf demselben Ausgangsniveau beginnende variabel aufsteigende Leuchtsäule ausgeführt ist.

Durch die unterschiedliche Ansteuerung der Leuchtbänder so, dass die Leuchtsäule unterschiedliche Höhe aufweist, können dem Fahrer aufgrund des peripheren Sehens Informationen über das ihm nicht im zentralen Gesichtsfeld zur Verfügung stehende Bewegungsumfeld vermittelt werden und Informationen über den physikalischen Fahrzeugzustand des eigenen Fahrzeugs.

Zusätzlich oder anstelle der entlang der A-Säulen angeordneten Leuchtbänder kann erfindungsgemäß ein Paar von Leuchtbändern am oberen Ende der A-Säulen im wesentlichen waagrecht oberhalb der Windschutzscheibe und fortlaufend bis zu den Seitenscheiben angeordnet sein. Die zusätzliche Anordnung von solchen Leuchtbändern gibt eine zusätzliche Möglichkeit, dem Fahrer Informationen über das Bewegungsumfeld und das eigene Fahrzeug zu vermitteln.

Wenn, was in weiterer Ausgestaltung der Erfindung vorgeschlagen wird, die Differenz der Leuchtlänge der Leuchtbänder proportional der Querbeschleunigung des eigenen Fahrzeugs eingestellt wird, kann daraus dem Fahrer eine unmittelbare Information für die gefahrlose Führung des eigenen Fahrzeugs vermittelt werden. So kann die gedachte Verbindungslinie zwischen der Hell/Dunkel-Grenze des in der rechten A-Säule angeordneten Leuchtbandes mit der Hell/Dunkel-Grenze des in der linken A-Säule angeordneten Leuchtbandes in ihrer Neigung vom Fahrer erfasst werden und es kann diese Neigung so gesteuert werden, dass sie etwa vergleichbar der Neigung eines Zweiradfahrers in Kurven ein Maß für die auftretende Querbeschleunigung darstellt. Diese Neigung entspricht der Neigung der Dreieckspfeilspitze bzw. der Dreieckspfeilspitzen bei der weiter oben beschriebenen erfindungsgemäßen Ausbildung eines Assistenzsystems mit Dreieckspfeilspitzen als Fahrzeugsymbol des virtuellen Fahrzeugs.

Bevorzugt soll die größere Leuchtlänge des Leuchtbandes auf der Fahrzeugseite eingestellt werden, in deren Richtung die Querbeschleunigung wirkt.

Mit Hilfe der Einstellung der variablen Leuchtlänge der Leuchtbänder können aber auch, was gemäß einer weiteren Ausbildung der Erfindung vorgeschlagen wird, auftretende Beschleunigungen in Fahrtrichtung des Fahrzeugs dem Fahrer angezeigt werden, indem die Länge der Leuchtbänder bzw. die Höhe der Leuchtsäulen auf beiden Fahrzeugseiten gleich und in Abhängigkeit der auftretenden Beschleunigungen gesteuert wird.

Bevorzugt sollen die Leuchtbänder nach der Erfindung als Kaltkathodenröhren ausgebildet sein. Solche Kaltkathodenröhren sind handelsübliche Bauelemente, die insbesondere im Bereich der in Kraftfahrzeugen vorkommenden Gleichstromspannungen bis 12 Volt betrieben werden können, um räumlich unterschiedlich lange Lichtbänder zu erzeugen, bzw. auch unterschiedlich große Helligkeit des gesamten Lichtbandes darzustellen.

Schließlich wird in weiterer Ausgestaltung der Erfindung vorgeschlagen, dass das Steuergerät so angepasst ist, dass in Abhängigkeit von Fahrzeugdaten (FD) und/oder Umgebungsdaten (UD) Leuchtbänder unterschiedlicher Farbe aktiviert werden. Die Leuchtbänder unterschiedlicher Farbe können anstelle oder zusätzlich zu den oben beschriebenen Leuchtbändern vorgesehen sein. Auch hierdurch können dem Fahrer über den Weg des peripheren Sehens Informationen über das Bewegungsumfeld als auch Informationen über den Fahrzustand des eigenen Fahrzeugs vermittelt werden und zwar in einer Weise, dass dadurch eine Führungsidentität vorgegeben wird, der der Fahrer folgen kann, indem er geeignete Handlungen zur Änderung des Fahrzustands des eigenen Fahrzeugs einleitet.

In den Zeichnungen zeigt
- Fig. 1: ein Blockschaltbild eines erfindungsgemäßen Assistenzsystems für den Fahrer eines Kraftfahrzeugs,
- Fig. 2a: die Einspiegelung eines mit der Anordnung nach Fig. 1 generierten Fahrzeugsymbols in das Sichtfeld des Fahrers im Längsschnitt schematisch,
- Fig. 2b: die Anordnung nach Fig. 2a in Blickrichtung des Fahrers bei Geradeausfahrt auf der rechten Fahrspur einer Fahrbahn,
- Fig. 3: die Sequenz der Bewegung des Lotsenfahrzeugsymbols bei Auftreten eines Hindernisses in der realen Fahrtrichtung des Fahrzeugs aus der Sicht des Fahrers,
- Fig. 4: einen Fahrzustand entsprechend Fig. 3 mit einer Referenzmarkierung 30 zur Anzeige einer seitlichen Versetzung 15,
- Fig. 5a und 5b: die Sequenz des Einscherens in die rechte Fahrbahn nach einem Überholvorgang,
- Fig. 5c: den Bewegungspfad nach einem Überholvorgang entsprechend der Sequenz nach den Fig. 5a, 5b, bei dem ein Einscheren nach rechts nicht möglich ist,
- Fig. 6: eine schematische Ansicht entsprechend Fig. 2, bei der das Fahrzeugsymbol durch zwei quer beabstandete Dreieckspfeilspitzen 11 gebildet ist,
- Fig. 7a und 7b: die Sequenz eines Abbiegevorgangs von der Fahrbahn 20 in eine Abzweigung 21,
- Fig. 8: das Blickfeld eines Fahrers aus einem Fahrzeug nach vorne, vergleichbar dem Blickfeld nach den Fig. 2b bis 7b schematisch, jedoch mit einer Anordnung von Leuchtbändern entlang der A-Säulen,
- Fig. 9: eine Ansicht entsprechend Fig. 8, jedoch mit zusätzlich oberhalb der Windschutzscheibe und der Seitenscheiben verlaufenden Querleuchtbändern und
- Fig. 10: eine Ansicht entsprechend der Fig. 8 und 9, jedoch in einem Fahrzustand, indem ein im hinteren Halbraum des Fahrzeugs sich annähernder Bewegungskonkurrent durch das Assistenzsystem erfasst und durch die Leuchtbänder dem Fahrer eine Führungsanweisung gegeben wird.

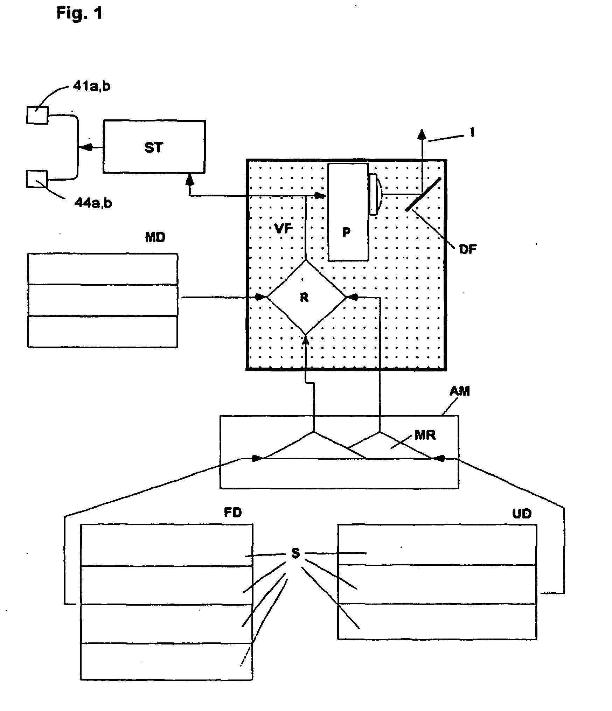

Das in Fig. 1 als Blockschaltbild schematisch dargestellte Beispiel eines erfindungsgemäßen Assistenzsystems zeigt in seinem unteren Bereich einen Block FD für die Erfassung von Fahrzeugdaten und einen Block UD für die Erfassung von Umgebungsdaten. Jeder dieser Blöcke, FD, UD umfasst eine Vielzahl von Sensoren S zur Detektion der unterschiedlichsten Daten. Als von den Sensoren S zu erfassende Fahrzeugdaten kommen vor allem in Betracht: die physikalischen Abmessungen des Fahrzeugs, maximale Querbeschleunigung, maximale Beschleunigung und Verzögerung, bezogen auf Normbedingungen, aktuelle Fahrgeschwindigkeit, Schlupf- und Gierverhalten, geodätische Position und Bewegungsrichtung des Fahrzeugs, geometrische Zuordnung der Fahrerposition zum Sichtfeld, Vorgaben der Aktivatoren des Fahrzeugs aus dem aktuellen Betrieb, wie Lenkeinschlag, Stellung des Gaspedals bzw. des Bremspedals oder der auf die einzelnen Räder ausgeübten Bremskräfte und schließlich auch Signalisation von Bewegungsabsichten, wie die Stellung der Fahrtrichtungsanzeiger oder Fern- bzw. Abblendlicht. Als zu detektierende Umgebungsdaten kommen in Betracht geodätische Beschreibung der möglichen Fahrwege, Wegbeschaffenheit, Unebenheiten, Schrägneigung der Fahrbahn, Reibungsbeiwerte, seitlicher Abstand des Fahrzeugs von Fahrspurbegrenzungen, vorgeschriebene, streckenbezogene maximale oder minimale Geschwindigkeit, Entfernung und Richtung von festen Hindernissen, Entfernung, Richtung und Differenzgeschwindigkeit von anderen bewegten Objekten, Außentemperatur, Sichtbedingungen wie z. B. Helligkeit. Die nicht abschließend aufgezählten Fahrzeugdaten FD und Umgebungsdaten UD werden zunächst einem Block AM von Assistenzmodulen, wie z. B. Navigationssystem, Antiblockiersystem, elektronischen Stabilitätskontrolleinrichtung und/oder Bremsassistent zugeführt, die jeweils ihre eigenen Modulrechner MR aufweisen. Von dem Assistenzmodulblock AM werden die Fahrzeugdaten FD und Umgebungsdaten UD entweder unverändert oder durch Rechenoperationen der Modulrechner MR transformiert einem zentralen Prozessrechner R zugeführt. Diesem zentralen Prozessrechner R werden zusätzlich Missionsdaten MD zugeführt, die der Fahrer vor Antritt der Fahrt in einen geeignet ausgebildeten Missionsdatenblock eingegeben hat. Als solche Missionsdaten kommen in Betracht: die Sollgeschwindigkeit, gewünschte Sicherheitsabstände zu den festen und bewegten Hindernissen, gewünschter Nutzungsanteil der möglichen quer- und Längsbeschleunigungen des Fahrzeugs (entsprechend einer gewünschten, eher ruhigen oder sportlichen Fahrweise) Fahrtziel mit Wegpunkten, Einschränkungen für die Routenwahl und/oder Verbrauchsoptimierung bezüglich des Treibstoffs und weitere. Der Prozessrechner R ist so angepasst und programmiert, dass er aus den ihm zugeführten Datengruppen Fahrzeugdaten FD, Umgebungsdaten UD und Missionsdaten MD ein virtuelles sich gefahrlos in der realen Umgebung bewegendes Fahrzeug VF generiert. Der vom Prozessrechner R ausgegebene, das virtuelle Fahrzeug bildende Datensatz, wird in einer Projektionseinheit P in ein an das wahre Sichtfeld des Fahrers angepasstes perspektivisch korrektes Fahrzeugsymbol umgesetzt und auf eine Displayfläche DF projiziert. Von dort wird dieses Fahrzeugsymbol als Information I in das Sichtfeld des Fahrers projiziert.

In einer Variante des erfindungsgemäßen Assistenzsystems nach Anspruch 10 wird der Datensatz des Prozessrechners R an eine Steuereinheit ST geleitet von der aus Leuchtbänder im Fahrzeug so angesteuert werden, dass sie als Fahrzeugsymbol des virtuellen Fahrzeugs dienen.

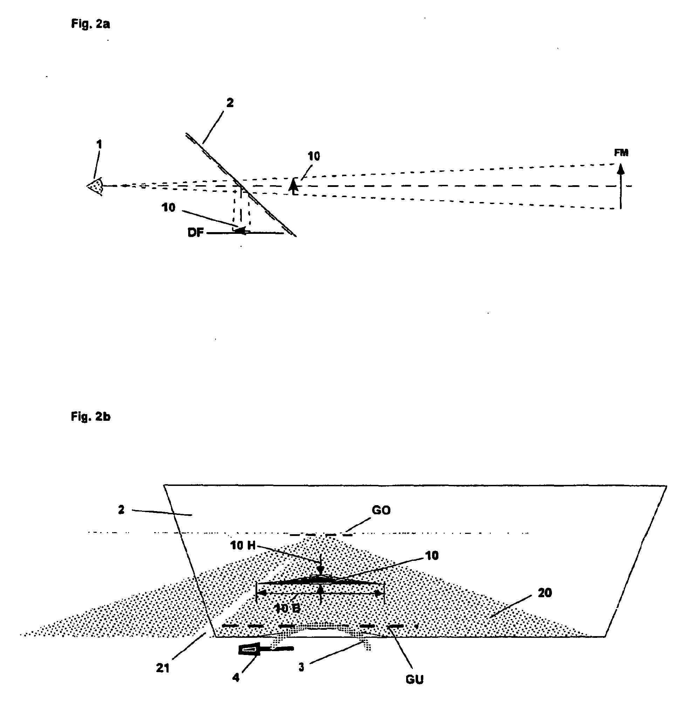

Fig. 2a erläutert die Abbildungsgeometrie für die Projektion des Fahrzeugsymbols 10 von der Displayfläche DF in das Sichtfeld des Fahrers. Mittels einer Reflektion an der teildurchlässig spiegelnden Windschutzscheibe 2 des realen Fahrzeugs wird das Lotsenfahrzeugsymbol für den Fahrer 1 vor der realen Kulisse, die er durch die Windschutzscheibe 2 im Sichtfeld hat, sichtbar.

Die schematische Anordnung nach Fig. 2a ist in Fig. 2b aus der Blickrichtung des Fahrers dargestellt. Im wesentlichen ist, stark vereinfacht, das reale Sichtfeld des Fahrers durch die Windschutzscheibe 2 in Längsrichtung des Fahrzeugs dargestellt. Das Lenkrad des Fahrers ist mit 3 bezeichnet. Ein Fahrtrichtungsanzeiger üblicher Bauart mit dem Referenzeichen 4. Der Fahrer bzw. das reale Fahrzeug bewegt sich auf einer Fahrbahn 20 mit der Mittellinie 21, wobei die Fahrbahn 20 in der gezeigten Fig. im wesentlichen gerade verläuft. Das Fahrzeugsymbol des Lotsenfahrzeugs ist als flache Dreieckspfeilspitze 10 dargestellt, wobei diese Pfeilspitze teiltransparent sein soll, so dass die im Bereich der Dreieckspfeilspitze liegenden Teile der Fahrbahn für den Fahrer sichtbar bleiben. Die Basisbreite 10b der Dreieckspfeilspitze 10 soll proportional der Breite des realen Fahrzeugs zu der zur Verfügung stehenden Breite der Fahrspur dargestellt sein. Die Höhe H der Dreieckpfeilspitze D ist proportional der in Fahrtrichtung wirkenden Beschleunigung auf das Fahrzeug. Der Abstand der Dreieckspfeilspitze 10 von der Unterkante der Windschutzscheibe 2, d. h. also von der Unterkante des Sichtfeldes des Fahrers, ist geschwindigkeitsabhängig so gewählt, dass er einem mittleren Sicherheitsabstand in der realen Umgebung entspricht. Je nach eingestelltem Missionsdatum kann dieser Abstand für den stationären Fahrzustand größer oder geringer eingestellt sein. Anstelle einer Dreieckspfeilspitze als Fahrzeugsymbol kann natürlich auch jedes andere geometrische Symbol als Lotsenfahrzeugsymbol verwendet werden, wie z. B. die stilisierte Heckansicht eine PKW.

Das Assistenzsystem arbeitet nun in der Weise, dass dann, wenn die reale Geschwindigkeit des realen Fahrzeugs mit der eingestellten Sollgeschwindigkeit übereinstimmt, der Abstand und die geometrische Abmessung des Lotsenfahrzeugsymbols konstant bleibt. Ist die tatsächliche Geschwindigkeit des realen Fahrzeugs geringer als die eingestellte Sollgeschwindigkeit, so entfernt sich die Dreieckspfeilspitze nach vorne, wobei sie entsprechend den perspektivischen Verhältnissen kleiner wird. Für den Fahrer wäre dies ein Hinweis durch mehr Gasgeben sein Fahrzeug zu beschleunigen und dadurch dem vorauseilenden Lotsenfahrzeug (Lotsenfahrzeugsymbol) zu folgen und wieder zu diesem aufzuschließen. Je nach Umweltbedingungen wird die eingestellte Sollgeschwindigkeit aufgrund der im Prozessrechner vorgenommen Generierung des virtuellen Fahrzeugs vermindert, so dass dann, wenn der Fahrer die reale Fahrgeschwindigkeit seines Fahrzeugs nicht vermindert, sich der Abstand zu dem Lotsenfahrzeugsymbol verringert, wobei wiederum perspektivisch angepasst, in diesem Fall sich die Dreieckspfeilspitze in ihrer geometrischen Ausdehnung vergrößert. Der Fahrer hat in diesem Zustand die Information einer zu dichten Annäherung an das Lotsenfahrzeug und wird so sein reales Fahrzeug durch Verminderung der Geschwindigkeit wieder in einen größeren Abstand vom vorauseilenden Lotsenfahrzeug bringen. Zusätzlich zur Veränderung der Größe des Lotsenfahrzeugsymbols kann durch entsprechende Programmierung des Prozessrechners R auch eine Veränderung von Farbe, Helligkeit oder Kontrast vorgesehen sein, wenn das reale Fahrzeug dem Lotsenfahrzeug nicht im vorgesehenen sicheren Abstand folgt. Dabei ist es bei der praktischen Umsetzung eines erfindungsgemäßen Assistenzsystems ohne weiteres möglich, zusätzlich zur optischen Darstellung eines virtuellen Lotsenfahrzeugs dieses auch akustisch, etwa durch typische Fahrgeräusche, mit Hilfe von Lautsprechern, dem Fahrer zu vermitteln und dann bei Abweichung des realen Fahrzeugs von den eingestellten Missionsdaten die akustische Kulisse des Lotsenfahrzeugs analog zu ändern.

Das Programm des Prozessrechners R bzw. der Projektionseinheit P ist so ausgelegt, dass dann, wenn das Lotsenfahrzeugsymbol 10 etwa infolge zu geringer Geschwindigkeit des realen Fahrzeugs nach oben oder infolge zu großer Geschwindigkeit des realen Fahrzeugs nach unten aus dem Sichtfeld verschwinden würde, eine Umwandlung des Fahrzeugsymbols 10 in Grenzwertsymbole in Form von Grenzlinien GO und GU stattfindet. Dadurch wird dem Fahrer angezeigt, dass das Assistenzsystem in Funktion ist, er sich jedoch in einem Fahrzustand befindet, indem er den vom Assistenzsystem generierten Lotsenfahrzeug nicht folgt.

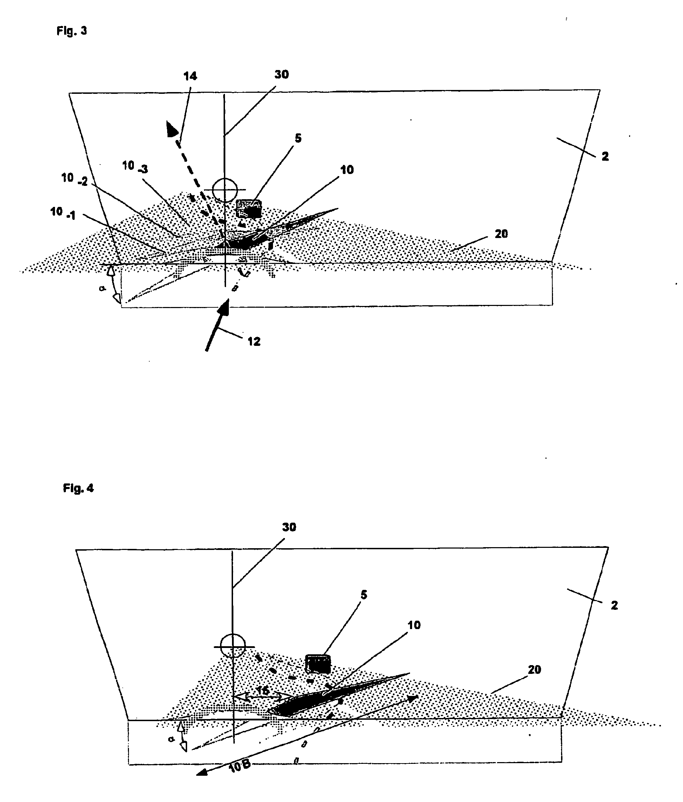

Das in Fig. 3 dargestellte Bild entspricht im wesentlichen der schematischen Ansicht nach Fig. 2, zeigt jedoch die Bewegungssequenz des Lotsenfahrzeugsymbols 10 bei Auftreten eines Hindernisses 5 in der Fahrtrichtung 12 des realen Fahrzeugs. Ausgehend von der Fahrtrichtung 12, die z. B. dem Wiedereinscheren in die rechte Fahrbahn nach einem Überholvorgang entspricht, ist das Lotsenfahrzeugsymbol mit 10-₃ bezeichnet. Entsprechend der dedektierten Umgebungs- und Fahrzeugdaten hat der Prozessrechner R eine Änderung der Fahrtrichtung des virtuellen Fahrzeugs ermittelt und zeigt diese durch Veränderung der Neigung des Lotsenfahrzeugsymbols von 10-₃ über10₋₂ und 10₋₁ bis zu dem mit 10 bezeichneten momentan dargestellten Lotsenfahrzeugsymbol 10 an. Die Neigung α der als Lotsenfahrzeugsymbol dienenden Dreieckspfeilspitze ist beträchtlich, so dass dementsprechend eine beträchtliche Lenkkorrektur des Fahrers notwendig ist, um dem Lotsenfahrzeug, das sich in der korrigierten, mit 14 bezeichneten Fahrtrichtung bewegt, zu folgen.

Das in Fig. 4 gezeigte schematische Sichtfeld des Fahrers entspricht weitgehend der Darstellung in Fig. 3 mit dem Unterschied, dass die Sequenz der Neigungsänderung des Lotsenfahrzeugsymbols 10 weggelassen ist, dafür aber als vertikale Linie eine Referenzmarkierung 30 gezeigt ist, die als zusätzliches Hilfsmittel von der Projektionseinheit P in die Windschutzscheibe eingespiegelt werden kann und dem Fahrer eine seitliche Versetzung 15 seines Fahrzeugs zur Mitte des zur Verfügung stehenden Bewegungspfades anzeigt.

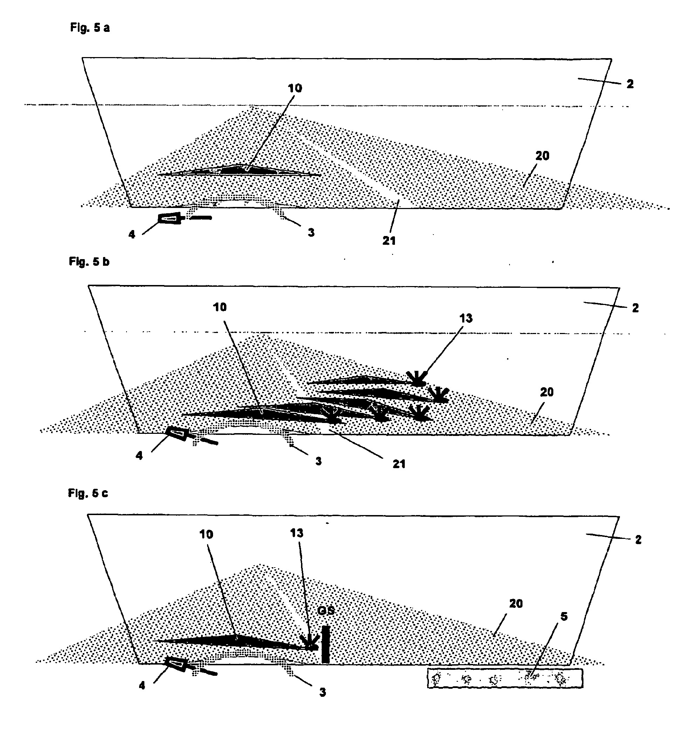

Die in den Fig. 5a und 5b gezeigte Sequenz eines Überholvorgangs beginnt mit der in Fig. 5a dargestellten Situation, in der sich das reale Fahrzeug auf der linken Fahrspur einer Fahrbahn 20 befindet, d. h. also links von der Fahrbahnmittellinie 21 und dem Lotsenfahrzeug 10 in angemessenem Abstand folgt. Ausgehend von dieser Situation kann entweder automatisch in Abhängigkeit der Detektion der Umgebungsdaten oder in Abhängigkeit der Betätigung des realen Fahrtrichtungsanzeigers 4 durch den Fahrer das Lotsenfahrzeug 10 die in Fig. 5b gezeigte Bewegungssequenz ausführen, wobei in jedem Zeitpunkt für den Fahrer das Dreieckssymbol des Lotsenfahrzeugs nur einfach vorhanden ist, d. h. dass der Fahrer nicht mehrere Dreiecke sieht sondern immer nur eines. Als vorteilhaftes Hilfsmittel für den Fahrer kann das mit 13 bezeichnete Blinklichtsymbol in Abhängigkeit der Betätigung des Fahrtrichtungsanzeigers 4 vorgesehen sein. Entsprechend der Darstellung in Fig. 5b kann der Fahrer also bedenkenlos durch entsprechende Lenkradbewegungen dem vorauseilenden Lotsenfahrzeugsymbol 10 nach rechts folgen ohne eine Gefährdung, etwa durch zu geringen Abstand von dem zu überholenden Fahrzeug, befürchten zu müssen.

Eine zusätzliche Hilfsfunktion des Assistenzsystems für den Fahrer ist in Fig. 5c dargestellt, die wiederum die Situation entsprechend Fig. 5b wiedergeben soll. In dieser gezeigten Sequenz ist das real für den Fahrer nicht sichtbare Hindernis 5 etwa in Form eines überholten Fahrzeugs noch zu nahe am eigenen Fahrzeug, so dass ein Einscheren nach rechts in die rechte Fahrbahnhälfte 20 vermieden werden muss. Das Lotsenfahrzeugsymbol 10 würde also nicht nach rechts schwenken. Zusätzlich ist als Warnhinweis für den Fahrer eine zeitliche Grenzlinie GS eingespiegelt, die auch farblich hervorgehoben sein kann und dem Fahrer anzeigt, dass eine Fahrbewegung nach rechts noch nicht möglich ist.

Die Darstellung nach Fig. 6 entspricht der Ansicht gemäß 2b, wobei das Lotsenfahrzeugsymbol in Form zweier quer beabstandeter Dreieckspfeilspitzen 11 gebildet ist. Damit bleibt der zentrale Bereich des Gesichtsfeldes des Fahrers, d. h. also die real vor ihm liegende Fahrbahn für die natürliche Umfelderkennung und Analyse frei. Zusätzlich erleichtern die inneren und die äußeren Begrenzungskonturen des Dreieckspaares 11 vor allem eine bessere Auflösung von relativen Bewegungen des Lotsenfahrzeugsymbols im fernen peripheren Gesichtsbild. Besonders bei der Abarbeitung von Blickprogrammen des Fahrers beim weiteren Umgebungsscreening, etwa beim Ablesen von Wegweisern oder ähnlichen Verkehrshilfsinformationen, die regelmäßig nur weit ab vom tatsächlichen Bewegungspfad gelesen werden können, ergeben sich dadurch Vorteile.

Die in den Fig. 7a und 7b gezeigte Sequenz eines Abbiegevorgangs von der Fahrbahn 20 in eine Abzweigung 22 verwendet als Lotsenfahrzeugsymbol wieder das Pfeilspitzenpaar gemäß der Darstellung in Fig. 6. Fig. 7a zeigt die Einleitung des Abbiegevorgangs entsprechend der mittels eines Navigationssystems und/oder der Missionsdaten dem Prozessrechner mitgeteilten Informationen. Zusätzlich zum erfindungsgemäßen Assistenzsystem ist das Vorhandensein eines Navigationsdisplays 6 im Instrumentenfeld des Fahrers angedeutet. Die Neigung und der Abstand der als Lotsenfahrzeugsymbol dienenden Dreieckspfeilspitzen 11 in Fig. 7a zeigt, dass der Abbiegevorgang durch entsprechende Lenkradbewegung des Fahrers ausreichend rechtzeitig vor der tatsächlichen Abzweigung 22 eingeleitet wird. In Fig. 7b ist die darauffolgende Situation dargestellt, in der der Fahrer offensichtlich sehr spät eine entsprechende Fahrzeugsteuerung vorgenommen hat und dadurch der Abstand zum Lotsenfahrzeugsymbol sich erheblich verringert hat und darüber hinaus die Neigung des Lotsenfahrzeugsymbols nach rechts deutlich vergrößert ist, woraus sich für den Fahrer unmittelbar ergibt, dass er seine Geschwindigkeit drastisch verringern und den Lenkeinschlag drastisch erhöhen muss, wenn er die Abzweigung 22 noch benutzen will.

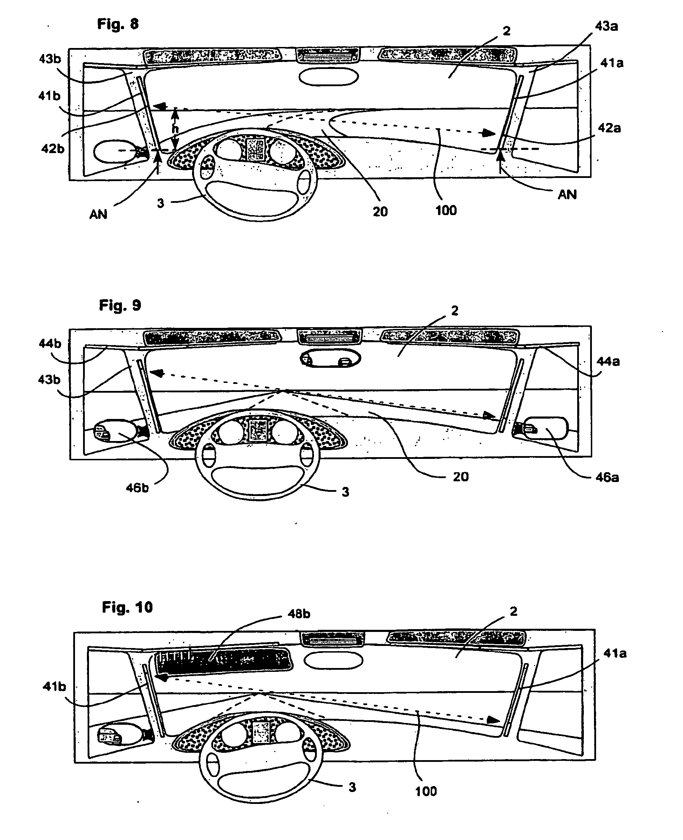

Die schematische Darstellung des Fahrerplatzes eines Fahrzeugs mit erfindungsgemäßem Assistenzsystem gemäß Fig. 8 zeigt die Ausbildung einer Führungsidentität als gedachte Verbindungslinie 100 (in der Fig. 8 strichliert dargestellt) zwischen den Hell/Dunkel-Grenzen 42a, 42b von entlang der rechten A-Säule 43a angeordnetem Lichtband und entlang der linken A-Säule 43b des Fahrzeugs angeordnetem Lichtband analog dem Pfeil 10 in den Fig. 2b bis 5c bzw. analog den Pfeilen 11 in Fig. 6 bis 7b. Obwohl also die Verbindungslinie 100 in realiter im Fahrzeug bzw. in der Windschutzscheibe 2 des Fahrzeugs nicht aufscheint, kann durch die Ansteuerung der Lichtbänder und entsprechende Einstellung der aufsteigenden Leuchtsäulen 41 a, 41 b dem Fahrer der Eindruck einer Neigung dieser gedachten Verbindungslinie 100 vermittelt werden und damit ein Maß der auftretenden Querbeschleunigung. Die Neigung der Verbindungslinie 100 entspricht also der Neigung der Dreieckspfeilspitze 10 in den Fig. 2b bis 5c bzw. der Neigung des Pfeilspitzenspaar in den Fig. 7a, 7b. Wie im Anspruch 17 angegeben, könnten zusätzlich zur unterschiedlichen Steuerung der Höhe der Leuchtsäulen 41, 41 b und damit der unterschiedlichen Höhe der Hell/Dunkel-Grenzen 42a, 42b zusätzlich Leuchtbänder mit unterschiedlicher Farbe angeordnet sein und entsprechend angesteuert werden. Die Leuchtbänder sind vorzugsweise als Kaltkathodenröhren ausgebildet. Die in Fig. 8 dargestellte Situation zeigt die Kurvenfahrt des Fahrzeugs, wobei die Neigung der Verbindungslinie 100 die Querbeschleunigung der Führungsidentität bzw. des virtuellen Lotsenfahrzeugs visualisiert. Der Lenkradeinschlag des Lenkrads 3 weist auf die Kurvenfahrt hin.

Die Darstellung gemäß Fig. 9 zeigt die zusätzliche Anordnung von horizontal verlaufenden Querleuchtbändern in 44a, 44b in Form von Kaltkathodenröhren am oberen Rand der Windschutzscheibe und der Seitenscheiben im Bereich der A-Säulen. Die Darstellung zeigt eine Fahrsituation, bei der der Fahrer bzw. das Fahrzeug die mittlere Fahrspur der Fahrbahn 20 nicht einhält sondern nach links versetzt einen Teil der Überholspur befährt. Ein sich nahezu vollständig im toten Winkel befindendes überholendes Fahrzeug auf der Überholspur (angedeutet in einem linken Rückspiegel 46b des Fahrzeugs) stellt eine Gefährdung dar. Das Assistenzsystem steuert demnach die virtuelle Führungsidentität nach rechts, wodurch eine entsprechend höhere Querbeschleunigung signalisiert wird. Es leuchten demnach die im Bereich der linken A-Säule befindlichen Querleuchtbänder 44b oberhalb der linken Seitenscheiben und oberhalb der Windschutzscheibe zusätzlich zu der Leuchtsäule 41 b entlang der linken A-Säule 43b auf. Die Neigung der gedachten Verbindungslinie 100 nimmt einen Maximalwert ein. Eine zusätzliche Verstärkung der Signalwirkung der Führungsidentität könnte durch einen Farbwechsel etwa von weiß zu rot oder orange durch parallel angeordnete Leuchtbänder erreicht werden, was in der Darstellung der Schwarz/Weiß-Zeichnung unterblieben ist.

Die Darstellung nach Fig. 10 gibt schematisch eine Fahrsituation wieder, bei dem der Fahrer des Fahrzeugs einen Spurwechselversuch nach links gestartet hat ohne ein sich von hinten links annäherndes überholendes Fahrzeug zu bemerken oder den Abstand oder die Relativgeschwindigkeit eines solchen Fahrzeugs richtig eingeschätzt zu haben. Der Versuch nach links zu fahren, ist durch die entsprechende Stellung des Lenkrads 3 angedeutet. Wie in den Fig. 8 und 9 wird die Neigung der gedachten Verbindungslinie 100 zwischen den Hell/Dunkel-Grenzen der rechten Leuchtsäule 41 a und der linken Leuchtsäule 41 b wieder als Rechtsfahrempfehlung des virtuellen Lotsenfahrzeugs bzw. der virtuellen Fahrzeugidentität interpretiert. Zusätzlich soll bei der gezeigten Anordnung eine Lichtverstärkung auf der rechten Fahrzeugseite durch das oberhalb der Windschutzscheibe und der Seitenscheibe gezeigte Querlichtband 44b erfolgen. Eine zusätzliche Lichtverstärkung könnte durch entsprechende Beschichtung der Rückseite einer Sonnenblende 48b entstehen, um dann, wenn mit Blendlicht von vorne zu rechnen ist, wenn also die Sonnenblende heruntergeklappt ist, die Intensität der Lichteinwirkung des virtuellen Lotsenfahrzeugs zu verstärken.

Zu den vielfältigen Möglichkeiten der Ausstattung des Assistenzsystems mittels Lotsenfahrzeug zählen die permanente Repräsentation einer Geschwindigkeitsbeschränkung oder einer selbst gewählten Sollgeschwindigkeit (Tempomat) durch die Präsenz des Fahrzeugsymbols 10 in entsprechendem Abstand, die Signalisation angepasster Geschwindigkeiten bei wechselnden Fahrbahnzuständen, die durch Schlupf- und Giersensoren ermittelt werden, aber auch die Vorbereitung des Fahrers auf plötzlich auftretende Eigenschaftsänderungen seines Fahrzeuges, die durch aktive Eingriffe von Assistenzsystemen, etwa bei adaptiven Steuerungen oder durch Precrash Systeme ausgelöst werden und das gewohnte Fahrverhalten des Fahrzeuges in der Nähe kritischer Situationen stark verändern. In diesen Fällen weist das Lotsenfahrzeugsymbol auf die von automatisch eingreifenden Assistenten bevorstehende Änderungstendenz des Bewegungszustandes des eigenen Fahrzeugs hin.

## Patentansprüche

1. Assistenzsystem für den Fahrer eines Fahrzeugs, insbesondere eines Kraftfahrzeugs für den öffentlichen Straßenverkehr, mit Sensoren (S), die so angepasst sind, dass sie kontinuierlich Fahrzeug- und Umgebungsdaten (FD, UD) und als Missionsdatum das Fahrtziel erfassen und mit einem Prozessrechner (R) der geeignet ist, die erfassten Daten in Informationssignale (I) für den Fahrer umzusetzen, wobei mittels einer Projektionseinheit (P), die so angepasst ist, dass sie ein Bild eines perspektivisch korrekt an das wahre Sichtfeld des Fahrers angepassten virtuellen Fahrzeugs (VF) als Fahrzeugsymbol (10) kontinuierlich so in das Sichtfeld (Windschutzscheibe 2) des Fahrers (1) projiziert, dass dieser es als vorausfahrendes Lotsenfahrzeug wahrnehmen kann, **dadurch gekennzeichnet, dass** das Assistenzsystem eine vom Fahrer betätigbare Bedieneinheit umfasst, von der aus dem Prozessrechner (R) als zusätzlich wählbare Missionsdaten (MD) die Sollgeschwindigkeit, Sicherheitsabstände zu festen und bewegten Hindernissen und der Nutzungsanteil der theoretisch möglichen Quer- und Längsbeschleunigungen zuführbar sind und der Prozessrechner ( R) so angepasst und programmiert ist, dass er aus allen erfassten Datengruppen (Fahrzeugdaten (FD), Umgebungsdaten (UD) und Missionsdaten (MD)) einen Bewegungspfad des virtuellen Fahrzeugs (VF) generiert, welcher eine gefahrlose Bewegung in der realen Umgebung aufzeigt.

2. Assistenzsystem nach Anspruch 1, **dadurch gekennzeichnet, dass** das Programm des Prozessrechners ( R) so angepasst ist, dass das Fahrzeugsymbol (10) sich bei Annäherung des realen Fahrzeugs an eingestellte Grenzwerte von Bewegungsparametern (Geschwindigkeit oder Beschleunigung) den Grenzen des Sichtfeldes (2) annähert und bei Überschreiten der eingestellten Grenzwerte in ein Grenzwertsymbol, vorzugsweise eine Grenzlinie, umgewandelt wird.

3. Assistenzsystem nach Anspruch 1 oder Anspruch 2, **dadurch gekennzeichnet, dass** es Mittel umfasst, mit denen Fahrzeugdaten (FD) und Umgebungsdaten (UD), wie an sich bekannt, Assistenzmodulen mit Modulrechnern (MR), insbesondere einer Stabilitätskontrolleinrichtung (ESP), einem Antiblockiersystem (ABS) oder einem Bremsassistenten für Notfallbremsung zuführbar sind und ein Eingriff eines Assistenzmoduls in die Steuerung des Fahrzeugs durch dafür charakteristische Signale an den Prozessrechner (R) gemeldet wird, aus denen dieser Signale für eine unstetige Änderung des Fahrzeugssymbols (10) generiert.

4. Assistenzsystem nach den Ansprüchen 1 bis 3, **dadurch gekennzeichnet, dass** das Fahrzeugsymbol (10) des Lotsenfahrzeugs als transparente Dreieckspfeilspitze ausgebildet ist, deren Basisbreite (10B) proportional der Breite des realen Fahrzeugs zu der zur Verfügung stehenden Fahrspur dargestellt wird.

5. Assistenzsystem nach den Ansprüchen 1 bis 3, **dadurch gekennzeichnet, dass** das Fahrzeugsymbol (10) des Lotsenfahrzeugs durch zwei quer beabstandete Dreieckspfeilspitzen ausgebildet wird, wobei die Gesamtbreite über beide Dreieckspfeilspitzen proportional der Breite des realen Fahrzeugs zu der zur Verfügung stehenden Fahrspur dargestellt wird.

6. Assistenzsystem nach den Ansprüchen 1 bis 5, **dadurch gekennzeichnet, dass** die als Lotsenfahrzeugsymbol (10) dienende Dreieckspfeilspitze oder das Paar von Dreieckspfeilspitzen proportional der auf das Fahrzeug einwirkenden Querbeschleunigung geneigt wird.

7. Assistenzsystem nach einem der Ansprüche 1 bis 6, **dadurch gekennzeichnet, dass** die Höhe (H) der Dreieckspfeilspitze(n) proportional der in Fahrtrichtung auf das Fahrzeug wirkenden Beschleunigungen dargestellt wird.

8. Assistenzsystem nach den Ansprüchen 1 bis 7, **dadurch gekennzeichnet, dass** das Programm des Prozessrechners ( R) so angepasst ist, dass, wie an sich bekannt, eine seitliche Versetzung (15) des Fahrzeugs zur Mitte des zur Verfügung stehenden Bewegungspfades (Fahrbahn 20) durch eine Referenzmarkierung (30) angezeigt wird.

9. Assistenzsystem nach den Ansprüchen 1 bis 8, **dadurch gekennzeichnet, dass** die Sensoren (S) für die Datengruppe Fahrzeugdaten (FD) auch solche umfassen, die geeignet sind, die Häufigkeit (Anzahl pro Zeiteinheit) und die Intensität von Steuerungsbewegungen des Fahrers (1) aufzunehmen und das Programm des Prozessrechners ( R) aus diesen Daten abrupte Veränderungen des Fahrzeugsymbols (10) generiert.

10. Assistenzsystem für den Fahrer eines Fahrzeugs, insbesondere eines Kraftfahrzeugs für den öffentlichen Straßenverkehr, bei dem mittels Sensoren (S) kontinuierlich Fahrzeug- und Umgebungsdaten (FD, UD) und als Missionsdatum das Fahrtziel erfasst werden und von einem Prozessrechner ( R) in Informationssignale (I) für den Fahrer umgesetzt werden, wobei mittels einer Steuereinheit (ST) ein optisches Symbol (10) eines virtuellen Fahrzeugs (VF) kontinuierlich so in den vom Fahrer optisch wahrnehmbaren nach vorne gerichteten Halbraum im Fahrzeug erzeugt wird, dass dieser es als Führungsidentität wahrnehmen kann, **dadurch gekennzeichnet, dass** dem Prozessrechner (R) über eine vom Fahrer betätigbare Bedieneinheit als zusätzlich wählbare Missionsdaten die Sollgeschwindigkeit, Sicherheitsabstände zu festen und bewegten Hindernissen und der Nutzungsanteil der theoretisch möglichen Quer- und Längsbeschleunigungen des realen Fahrzeugs zuführbar sind und der Prozessrechner ( R) so angepasst und programmiert ist, dass er aus den erfassten Datengruppen (Fahrzeugdaten FD), Umgebungsdaten (UD) und Missionsdaten (MD) einen gefahrlose Bewegung in der realen Umgebung zulassenden Bewegungspfad des virtuellen Fahrzeugs (VF) generiert, welcher dem Fahrer durch das Fahrzeugsymbol vermittelt wird, wobei als Fahrzeugsymbol wenigstens ein Paar von dem Fahrer zugewandter Leuchtbänder (41a, b, 44a, b) im Bereich der beiden A-Säulen (43a, b) des Fahrzeugs angeordnet sind, deren variable Leuchtlänge und/oder variable Leuchtintensität vom Prozessrechner ( R) über die Steuereinheit (ST) unabhängig voneinander gesteuert werden.

11. Assistenzsystem nach Anspruch 10, **dadurch gekennzeichnet, dass** die Leuchtbänder entlang der beiden A-Säulen (43a, b) angeordnet sind, wobei die Leuchtlänge der Leuchtbänder als auf demselben Ausgangsniveau (AN) beginnende variabel aufsteigende Leuchtsäule (41a, b) ausgeführt ist.

12. Assistenzsystem nach Anspruch 10 oder Anspruch 11, **dadurch gekennzeichnet, dass** ein Paar von Querleuchtbändem (44a, b) am oberen Ende der A-Säulen (43a, b) im wesentlichen waagrecht oberhalb der Windschutzscheibe (2) und der Seitenscheiben angeordnet ist.

13. Assistenzsystem nach den Ansprüchen 10 bis 12, **dadurch gekennzeichnet, dass** die Differenz der Leuchtlänge, bzw. die Höhendifferenz der Leuchtsäulen zwischen dem linken und dem rechten Leuchtband von der Steuereinheit (ST) proportional der auf das Fahrzeug einwirkenden Querbeschleunigung eingestellt wird.

14. Assistenzsystem nach Anspruch 13, **dadurch gekennzeichnet, dass** die größere Leuchtlänge des Leuchtbandes bzw. die größere Höhe (h) der Leuchtsäule auf der Fahrzeugseite eingestellt wird, in deren Richtung die Querbeschleunigung wirkt.

15. Assistenzsystem nach den Ansprüchen 10 bis 14, **dadurch gekennzeichnet, dass** die Steuereinheit (ST) so angepasst ist, dass die Länge der Leuchtbänder(44a, b) bzw. die Höhe der Leuchtsäulen (41 a, b) auf beiden Fahrzeugseiten gleich und in Abhängigkeit der in Fahrtrichtung auftretenden Beschleunigungen gesteuert wird.

16. Assistenzsystem nach den Ansprüchen 10 bis 15, **dadurch gekennzeichnet, dass** die Leuchtbänder als Kaltkathodenröhren ausgebildet sind.

17. Assistenzsystem nach den Ansprüchen 10 bis 16, **dadurch gekennzeichnet, dass** das Steuereinheit (ST) so angepasst ist, dass in Abhängigkeit von Fahrzeugdaten (FD) und/oder Umgebungsdaten (UD) Leuchtbänder unterschiedlicher Farbe aktiviert werden.

## Claims

1. Assistance system for the driver of a vehicle, in particular a motor vehicle for public traffic, having sensors (S) which are so adapted that they continuously detect vehicle and environment data (FD, UD) and, as mission data, the destination, and having a process computer (R) which is suitable for converting the detected data into information signals (I) for the driver, wherein, by means of a projection unit (P) which is so adapted that an image of a virtual vehicle (VF), which is perspectively correctly adapted to the true field of vision of the driver, is continuously projected as a vehicle symbol (10) into the field of vision (windscreen 2) of the driver (1) such that the driver is able to perceive it as a pilot vehicle driving ahead, **characterised in that** the assistance system comprises an operating unit actuable by the driver from which the desired speed, safety distances from fixed and moving obstacles and the utilisation ratio of the theoretically possible transverse and longitudinal accelerations may be supplied to the process computer (R) as additionally selectable mission data (MD), and the process computer (R) is so adapted and programmed that, from all the detected data groups (vehicle data (FD), environment data (UD) and mission data (MD)), it generates a movement path of the virtual vehicle (VF) which indicates a risk-free movement in the real environment.

2. Assistance system according to Claim 1, **characterised in that** the program of the process computer (R) is so adapted that the vehicle symbol (10) approaches the limits of the field of vision (2) when the real vehicle approaches set limit values of movement parameters (speed or acceleration) and, if the set limit values are exceeded, is converted into a limit value symbol, preferably a limit line.

3. Assistance system according to Claim 1 or Claim 2, **characterised in that** it comprises means by which vehicle data (FD) and environment data (UD), as known per se, can be supplied to assistance modules having module computers (MR), in particular a stability control device (ESP), an antilocking system (ABS) or a braking assistant for emergency braking, and an intervention by an assistance module in the control of the vehicle is reported to the process computer (R) by signals characteristic thereto, from which this computer generates signals for a discontinuous change of the vehicle symbol (10).

4. Assistance system according to Claims 1 to 3, **characterised in that** the vehicle symbol (10) of the pilot vehicle is constituted as a transparent triangular arrowhead whereof the base width (10B) is represented proportionally to the width of the real vehicle with respect to the available lane.

5. Assistance system according to Claims 1 to 3, **characterised in that** the vehicle symbol (10) of the pilot vehicle is formed by two transversely spaced triangular arrowheads, wherein the total width over both triangular arrowheads is represented proportionally to the width of the real vehicle with respect to the available lane.

6. Assistance system according to Claims 1 to 5, **characterised in that** the triangular arrowhead or the pair of triangular arrowheads serving as the pilot vehicle symbol (10) is inclined proportionally to the transverse acceleration acting on the vehicle.

7. Assistance system according to any of Claims 1 to 6, **characterised in that** the height (H) of the triangular arrowhead(s) is represented proportionally to the accelerations acting on the vehicle in the direction of travel.

8. Assistance system according to Claims 1 to 7, **characterised in that** the program of the process computer (R) is so adapted that, as known per se, a lateral offset (15) of the vehicle from the centre of the available movement path (lane 20) is indicated by a reference mark (30).

9. Assistance system according to Claims 1 to,8 **characterised in that** the sensors (S) for the data group vehicle data (FD) also comprise those which are suitable for recording the frequency (number per unit time) and the intensity of control movements by the driver (1) and the program of the process computer (R) generates abrupt changes to the vehicle symbol (10) from these data.

10. Assistance system for the driver of a vehicle, in particular a motor vehicle for public traffic, in which vehicle and environment data (FD, UD) and, as mission data, the destination are continuously detected by means of sensors (S) and converted by a process computer (R) into information signals (I) for the driver, wherein, by means of a control unit (ST), an optical symbol (10) of a virtual vehicle (VF) is continuously generated in the forward-facing half-space of the vehicle, which may be perceived visually by the driver, such that the driver is able to perceive the symbol as a guide identity, **characterised in that** the desired speed, safety distances from fixed and moving obstacles and the utilisation ratio of the theoretically possible transverse and longitudinal accelerations of the real vehicle may be supplied as additionally selectable mission data to the process computer (R) by way of an operating unit actuable by the driver, and the process computer (R) is so adapted and programmed that, from the recorded data groups (vehicle data (FD), environment data (UD) and mission data (MD)), it generates a movement path of the virtual vehicle (VF) permitting a risk-free movement in the real environment, which is indicated to the driver by the vehicle symbol, wherein, as the vehicle symbol, at least one pair of light strips (41a, b, 44a, b) facing the driver are arranged in the region of the two A-columns (43a, b) of the vehicle, whereof the variable light length and/or variable light intensity are controlled by the process computer (R) independently of one another by way of the control unit (ST).

11. Assistance system according to Claim 10, **characterised in that** the light strips are arranged along the two A-columns (43a, b), wherein the light length of the light strips is implemented as a variably increasing light column (41 a,b) beginning at the same starting level (AN).

12. Assistance system according to Claim 10 or Claim 11, **characterised in that** a pair of transverse light strips (44a, b) is arranged at the upper end of the A-columns (43a, b) substantially horizontally above the windscreen (2) and the side windows.

13. Assistance system according to Claims 10 to 12, **characterised in that** the difference in the light length, or the height difference of the light columns between the left and the right light strip, is set by the control unit (ST) proportionally to the transverse acceleration acting on the vehicle.

14. Assistance system according to Claim 13, **characterised in that** the greater light length of the light strip or the greater height (h) of the light column is set on the side of the vehicle in the direction of which the transverse acceleration acts.

15. Assistance system according to Claims 10 to 14, **characterised in that** the control unit (ST) is so adapted that the length of the light strips (44a, b) or the height of the light columns (41a, b) is the same on both sides of the vehicle and controlled depending on the accelerations occurring in the direction of travel.

16. Assistance system according to Claims 10 to 15, **characterised in that** the light strips are constituted as cold cathode tubes.

17. Assistance system according to Claims 10 to 16, **characterised in that** the control unit (ST) is so adapted that light strips of a different colour are activated depending on vehicle data (FD) and/or environment data (UD).

## Revendications

1. Système d'assistance pour le conducteur d'un véhicule, en particulier d'un véhicule automobile pour le trafic routier, comprenant des capteurs (S) qui sont adaptés de telle manière qu'ils collectent en continu des données du véhicule et de l'environnement (FD, UD) et la destination comme donnée de mission, et un calculateur de processus (R) qui est approprié pour convertir les données collectées en signaux d'information (I) pour le conducteur, selon lequel au moyen d'une unité de projection (P) qui est adaptée de telle manière qu'elle projette en continu dans le champ visuel (pare-brise 2) du conducteur, comme symbole de véhicule (10), une image en perspective correcte d'un véhicule virtuel (VF) adapté au véritable champ visuel du conducteur (1) de telle sorte que celui-ci puisse le percevoir comme véhicule pilote le précédant, **caractérisé en ce que** le système d'assistance comprend une unité de commande utilisable par le conducteur par laquelle la vitesse théorique, les distances de sécurité par rapport à des obstacles fixes et en mouvement et la fraction utile des accélérations transversales et longitudinales théoriquement possibles peuvent être envoyées au calculateur de processus (R) comme données de mission (MD) additionnellement sélectionnables et le calculateur de processus (R) est adapté et programmé de telle manière qu'il génère à partir de tous les groupes de données collectées (données du véhicule (FD), données de l'environnement (UD) et données de mission (MD)) un chemin de déplacement du véhicule virtuel (VF) qui montre un déplacement sans danger dans l'environnement réel.

2. Système d'assistance selon la revendication 1, **caractérisé en ce que** le programme du calculateur de processus (R) est adapté de telle manière que, lorsque le véhicule réel approche de valeurs limites établies de paramètres de déplacement (vitesse ou accélération), le symbole de véhicule (10) se rapproche des limites du champ visuel (2) et soit transformé en un symbole de valeur limite, de préférence une ligne limite, lors du dépassement des valeurs limites établies.

3. Système d'assistance selon la revendication 1 ou la revendication 2, **caractérisé en ce qu'**il comprend des moyens avec lesquels des données du véhicule (FD) et des données de l'environnement (UD) peuvent être envoyées, comme cela est connu en soit, à des modules d'assistance dotés de calculateurs de module (MR), en particulier un dispositif de contrôle de stabilité (ESP), un système antiblocage (ABS) ou un assistant de freinage pour le freinage d'urgence, et une intervention d'un module d'assistance dans le pilotage du véhicule est signalée au calculateur de processus (R) par des signaux caractéristiques à cet effet à partir desquels celui-ci génère des signaux pour une modification discontinue du symbole de véhicule (10).

4. Système d'assistance selon les revendications 1 à 3, **caractérisé en ce que** le symbole de véhicule (10) du véhicule pilote est conçu comme une pointe de flèche triangulaire transparente dont la largeur de la base (10B) est représentée proportionnellement à la largeur du véhicule réel par rapport à la bande de circulation disponible.

5. Système d'assistance selon les revendications 1 à 3, **caractérisé en ce que** le symbole de véhicule (10) du véhicule pilote est formé par deux pointes de flèche triangulaires transversalement espacées, la largeur totale englobant les deux pointes de flèche triangulaires étant représentée proportionnellement à la largeur du véhicule réel par rapport à la bande de circulation disponible.

6. Système d'assistance selon les revendications 1 à 5, **caractérisé en ce que** la pointe de flèche triangulaire servant symbole de véhicule (10) ou la paire de pointes de flèche triangulaires est inclinée proportionnellement à l'accélération transversale agissant sur le véhicule.

7. Système d'assistance selon les revendications 1 à 6, **caractérisé en ce que** la hauteur (H) de la (les) pointe(s) de flèche triangulaire(s) est représentée proportionnellement aux accélérations agissant dans le sens de la marche sur le véhicule.

8. Système d'assistance selon les revendications 1 à 7, **caractérisé en ce que** le programme du calculateur de processus (R) est adapté de telle manière que, comme cela est connu en soit, un décalage latéral (15) du véhicule vers le milieu du chemin de déplacement (bande de circulation 20) disponible est indiqué par un marquage de référence (30).

9. Système d'assistance selon les revendications 1 à 8, **caractérisé en ce que** les capteurs (S) pour le groupe de données du véhicule (FD) comprennent également ceux qui sont appropriés pour enregistrer la fréquence (nombre par unité de temps) et l'intensité de mouvements de pilotage du conducteur (1) et le programme du calculateur de processus (R) génère à partir de ces données des modifications abruptes du symbole de véhicule (10).

10. Système d'assistance pour le conducteur d'un véhicule, en particulier d'un véhicule automobile pour le trafic routier, selon lequel des données du véhicule et de l'environnement (FD, UD) et la destination en tant que donnée de mission sont collectées en continu au moyen de capteurs (S) et sont converties par un calculateur de processus (R) en signaux d'information (I) pour le conducteur, un symbole optique (10) d'un véhicule virtuel (VF) étant généré en continu dans le véhicule dans l'espace semi infini dirigé vers l'avant, optiquement perceptible par le conducteur au moyen d'une unité de contrôle (ST) de telle manière que celui puisse le percevoir comme identité de direction, **caractérisé en ce que** la vitesse théorique, les distances de sécurité par rapport à des obstacles fixes et en mouvement et la fraction utile des accélérations transversales et longitudinales théoriquement possibles du véhicule réel peuvent être envoyées comme données de mission additionnellement sélectionnables au calculateur de processus (R) par l'intermédiaire d'une unité de commande actionnable par le conducteur et le calculateur de processus (R) est adapté et programmé de telle manière qu'il génère à partir des groupes de données collectées (données du véhicule (FD), données de l'environnement (UD) et données de mission (MD)) un chemin de déplacement du véhicule virtuel (VF) autorisant un déplacement sans danger dans l'environnement réel, lequel chemin de déplacement est transmis au conducteur par le symbole de véhicule, au moins une paire de bandes lumineuses (41a, b, 44a, b) orientées vers le conducteur étant disposées comme symbole de véhicule dans la région des deux colonnes A du véhicule, leur longueur lumineuse variable et/ou leur intensité lumineuse variable étant commandée indépendamment l'une de l'autre par le calculateur de processus (R) par l'intermédiaire de l'unité de commande (ST).

11. Système d'assistance selon la revendication 10, **caractérisé en ce que** les bandes lumineuses sont disposées le long des deux colonnes A (43a, b), la longueur lumineuse des bandes lumineuses étant réalisée comme une colonne lumineuse (41 a, b) commençant au même niveau de départ (AN) montant de manière variable.

12. Système d'assistance selon la revendication 10 ou la revendication 11, **caractérisé en ce qu'**une paire de bandes lumineuses transversales (44a, b) sont disposées à l'extrémité supérieure des colonnes A (43a, b) de manière essentiellement horizontale au-dessus du pare-brise (2) et des vitres latérales.

13. Système d'assistance selon les revendications 10 à 12, **caractérisé en ce que** la différence de longueur lumineuse ou la différence de hauteur des colonnes lumineuses entre la bande lumineuse gauche et la bande lumineuse droite est ajustée par l'unité de contrôle (ST) proportionnellement à l'accélération transversale agissant sur le véhicule.

14. Système d'assistance selon la revendication 13, **caractérisé en ce que** la longueur lumineuse plus grande de la bande lumineuse ou la hauteur plus grande (h) de la colonne lumineuse apparaît sur le côté du véhicule dans la direction duquel l'accélération transversale agit.

15. Système d'assistance selon les revendications 10 à 14, **caractérisé en ce que** l'unité de commande (ST) est adaptée de telle manière que la longueur des bandes lumineuses (44a, b) ou la hauteur de colonnes lumineuses (41 a, b) est égale des deux côtés du véhicule et est commandée en fonction des accélérations survenant dans le sens de la marche.

16. Système d'assistance selon les revendications 10 à 15, **caractérisé en ce que** les bandes lumineuses sont conçues comme des tubes cathodiques froids.

17. Système d'assistance selon les revendications 10 à 16, **caractérisé en ce que** l'unité de commande (ST) est adaptée de telle manière que des bandes lumineuses de couleur différente soient activées en fonction des données du véhicule (FD) et/ou des données de l'environnement (UD).
